# EUROPEAN PATENT APPLICATION

(11) **EP 3 915 711 A1**
(43) Date of publication of application: **01.12.2021**
(21) Application number: 21176075.6
(22) Date of filing: 26.05.2021
(51) Int. Cl.: B23K 11/00, B23K 11/11, B23K 11/18

(54) **METHOD TO MECHANICALLY JOIN MATERIALS AND RELATIVE JOINING MEANS**

(30) Priority: 26.05.2020 IT 202000012409
(71) Applicant: Universita' Degli Studi Dell'Aquila, 67100 L'Aquila (IT)
(72) Inventor: LAMBIASE, Francesco, 67100 L'Aquila (IT); DI ILIO, Antoniomaria, 67100 L'Aquila (IT); PAOLETTI, Alfonso, 67100 L'Aquila (IT)
(74) Representative: Bosman, Cesare

(57) **Abstract**

A method to mechanically join two materials comprising in succession:
- a contact step, during which a first material (1), in which a first through hole (3) is made, is placed with a joining surface (1a) thereof in contact with a joining surface (2a) of a second material (2). The hole (3) is engaged by a joining element (4) made of a conductive material and with a higher melting temperature than the melting temperature of the second material (2). The joining element (4) comprises a locking end (5) and a crimping end (6a), where an axial crimping surface (7) with grooves (8) with an undercut profile is defined;
- a joining step, during which at least the axial crimping surface (7) is subjected to a heating operation so as to heat the portion of joining surface (2a) of the second material (2) with which it is in contact and fill the grooves (8) with the second material (2).

## Description

### CROSS-REFERENCE TO RELATED APPLICATIONS

This patent application claims priority from Italian patent application no. 102020000012409 filed on 26/05/2020.

### TECHNICAL FIELD

The present invention relates to a method to mechanically join materials. The present invention further relates to joining means used in the above method.

### BACKGROUND ART

Hybrid multi-material (HS) structures are used in a wide range of applications, including transportation, electronics, civil, and biomedical. HS include components of different materials (metals, polymers, composites): this allows the performance of the structure to be increased by exploiting the philosophy of "the right material in the right place".

The main challenge regarding the coupling of materials characterized by different mechanical, physical and thermal characteristics is represented by the joining technology.

The joining of different materials is generally carried out through two types of processes: adhesive joints and/or mechanical joints. Both of these technologies have various drawbacks. For example, adhesive joints have high shear stress resistance and low peeling stress. For this purpose, the edge to be jointed is suitably shaped to increase the performance of the adhesive joints. Adhesive joints also require time-consuming and expensive surface pre-treatment.

These pre-treatments are both mechanical (removal of the surface layer using metal brushes, sandblasting, etc.) and chemical (use of solvents) and also have a significant environmental impact. Moreover, the mechanical properties of adhesive joints are characterized by a high variability and uncertainty in the long term.

Mechanical joints (riveting, bolting, etc.) are widely used in the aircraft and shipbuilding industries. However, mechanical joining processes also have various drawbacks and problems, including the need for preliminary drilling of both sheets, with the consequent problems of coaxial holes that this entails.

In recent years, several alternative solutions have been proposed, which involve the functionalization of one or both surfaces to be joined and subsequent joining of a thermo-mechanical nature. Processes such as Laser Assisted Joining and Friction Assisted Joining have been used to join different types of materials (metal-thermoplastic, metal-composite). In recent years, these processes have been adapted to make hybrid joints between different materials. However, the use of such processes for joining different materials is still at an embryonic state. The mechanical properties are relatively low (compared to those of the base material), while the cycle times are long (5-10 s) .

The need was therefore felt to provide a solution capable of joining materials without incurring the drawbacks of the prior art.

The inventors of the present invention have devised a method of joining materials comprising joining means having a crimping surface, in which a plurality of grooves having an undercut profile are made.

### DISCLOSURE OF INVENTION

The object of the present invention is a method to mechanically join two materials; said method being characterized in that it comprises in succession:
- a contact step, during which a first material, in which a first through hole has previously been made, is placed with a joining surface thereof in contact with a joining surface of a second material; said previously made hole being engaged by a joining element made of a conductive material and having a melting temperature that is higher than the melting temperature of said second material; said joining element comprising a locking end positioned so as to lock said first material on the opposite side with respect to said second material and a crimping end, where an axial crimping surface placed in contact with said joining surface of said second material is defined; a plurality of grooves having an undercut profile being obtained in said axial crimping surface;
- a joining step, during which at least said axial crimping surface is subjected to a heating operation so as to heat the portion of joining surface of said second material with which it is in contact and cause said grooves to be filled with said second material.

Hereinafter, the term conductive material means an electrically and/or thermally conductive material.

It has been experimentally proven that the present invention is effective even if the difference in melting point between the joining element and the second material is only a few °C.

Preferably, said joining step comprises a compression operation, during which, simultaneously to the heating operation, the second material and said joining element are compressed against one another.

Preferably, said heating operation is carried out by means of a current flow, preferably by resistance welding, even more preferably by spot welding.

Preferably, said current flow is obtained by placing a first electrode in contact with the locking end and a second electrode in contact with the second material.

Preferably, said current flow is achieved by arranging a first and a second electrode in contact with the locking end.

Preferably, the method comprises a preliminary cutting step, during which a plurality of said grooves are obtained on the axial crimping surface.

Preferably, said cutting step is carried out using a laser technique.

A further object of the present invention is a joining element for joining two materials; said joining element being characterized in that it is made of a conductive material and comprises a locking end and a crimping end having an axial crimping surface placed, in use, in contact with a joining surface of a second material; a plurality of grooves with an undercut profile being obtained in said axial crimping surface.

Preferably, a plurality of grooves or nicks are cut into the locking end and side wall of the joining element such as to achieve a rough surface.

This increases the overall adhesion of the joining element with the first material.

### BRIEF DESCRIPTION OF THE DRAWINGS

Some embodiments are illustrated below by way of nonlimiting examples with the help of the appended drawings, wherein:
- Figures 1a and 1b schematically illustrate two steps of one embodiment of the method of the present invention; and
- Figures 2a and 2b schematically illustrate two steps of a further embodiment of the method of the present invention.

### BEST MODE FOR CARRYING OUT THE INVENTION

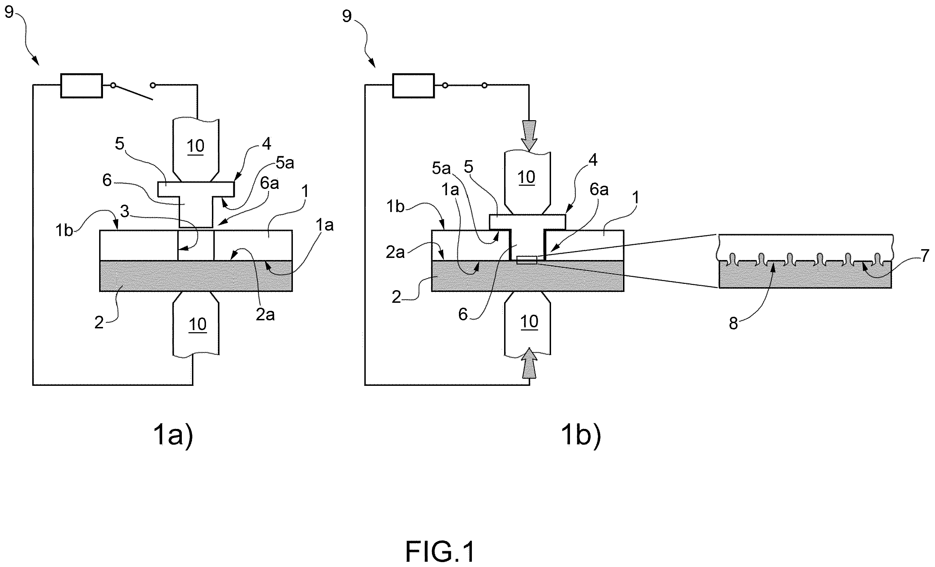

Figures 1a and 1b illustrate a joining system according to the method of the present invention. The system comprises a first material 1 made of Polyether-ether-ketone (PEEK) polymer and a second material 2 made of aluminium alloy AA7075.

The first and second materials are in sheet form and are arranged with respective joining surfaces 1a and 2a in contact with each other.

A through hole 3 is made in the first material 1.

The system comprises a joining element 4 made of titanium alloy Ti-6Al-4V and arranged to engage the hole 3 (Figure 1b). The hole 3 is made prior to the insertion of the joining element 4. In particular, the hole 3 can be made by any mechanical processing and, only subsequently is the joining element 4 inserted.

For the method of the present invention, it is essential that the joining element 4 has a higher melting temperature than that of the second material 2.

The joining element 4 comprises a locking head 5 and a stem 6 extending from the locking head 5. The locking head 5 is arranged with a surface 5a thereof abutting against a free surface 1b of the first material 1.

The stem 6 comprises a free end 6a having an axial crimping surface 7, wherein a plurality of grooves 8 having an undercut profile are made.

The grooves 8 were made using a pulsed fibre laser (YLP-RA30-1-50-20-20 of IPG). The plurality of grooves resulted in a square texture using the following process parameters:
- pulse frequency: 30 kHz;
- scanning speed: 1000 mm/s;
- hatch distance (distance between two consecutive scan lines): 0.3 mm;
- 40 repetitions.

The joining step was performed using a spot welder 9 with copper electrodes 10 having a diameter of 10 mm. An experimental test plan was conducted varying both the power from 300W to 600W and the welding time from 0.2 to 1.5 s.

The electrodes 10 are respectively arranged one in contact with the locking head 5 and one in contact with the second material 2 at the axial surface 7 of the joining element 4.

As illustrated in the enlargement of Figure 1b, the joining mechanism is based on heating the material 2, which has a lower melting temperature than the melting temperature of the joining element 4, and its penetration into the grooves 8.

Conversely to the above, the joining element 4 may be heated by methods other than current flow.

Heating can be achieved, for example, by induction, conduction, convection, ultrasound or laser. Another method of accomplishing heating could involve rotating the joining element. This would cause frictional heating of the portion of the second material in contact with the axial crimping surface.

Once the joint had been made using the system shown in Figures 1a and 1b, tensile tests were conducted to evaluate the mechanical properties of the joints. An MTS universal testing machine, model 322.121 equipped with a load cell with a capacity of 25 kN was used for this purpose.

The tensile tests verified that the tightness of the joints reaches very high values (even higher than 12 kN) corresponding to a breaking tension of about 150 MPa and with very short joining times (1.4 s) . This demonstrates that the method according to the present invention ensures the fabrication of joints with very promising mechanical performance. Furthermore, it should be emphasized that the method according to the present invention is easy to implement and, at the same time, is characterized by high productivity, as well as reduced energy requirements. These advantages are due to the low joining times (the heat does not spread radially), while the joining area is the one characterized by the highest electrical resistance (due to the presence of the texture that reduces the contact surface).

As is apparent from the above description, the method according to the present invention has the advantages of making a hole in only one of the sheets to be joined, of not having coaxial hole issues and of involving the possible protrusion of the joining element on one side of the joint only.

Furthermore, the method according to the present invention has the advantages of being feasible even when one of the sides of the joint is difficult to access and of entailing the disassembly of the joint by means of a simple heating operation.

In particular, heating by means of a welding machine has the following advantages:
1) Very low cycle times due to the high power and the localization of the heating in the joining area (the presence of the texture reduces the contact surface and increases the electrical resistance of this area).
2) Limited thermally altered zone and modest residual stresses. In addition, in the case of metallic materials, a reduced grain swelling is achieved thanks to:
   a. Low warm-up times;
   b. Low temperatures (it is not necessary to achieve the melting temperature but only the softening of the low-melting material). In this way it is possible to obtain high mechanical characteristics (static, fatigue) and a high resistance to corrosion.
3) Low heating system cost.
4) Easy integration into existing production systems as existing welding machines can be used.

An important advantage of the present invention is that the joining takes place between the rivet (generally made of high-performance material) and the second material. This means that the first material is free of any constraint regarding its melting temperature. Such an advantage allows a high degree of freedom in the choice of the first material.

Moreover, with the present invention, the joining takes place by melting only one material (the second material), without incurring, therefore, problems related to a different thermal contraction if there are two melting materials.

Lastly, the present invention provides that the grooves are obtained only on the surface of the joining element. This avoids the need for grooves on thin sheets or large panels.

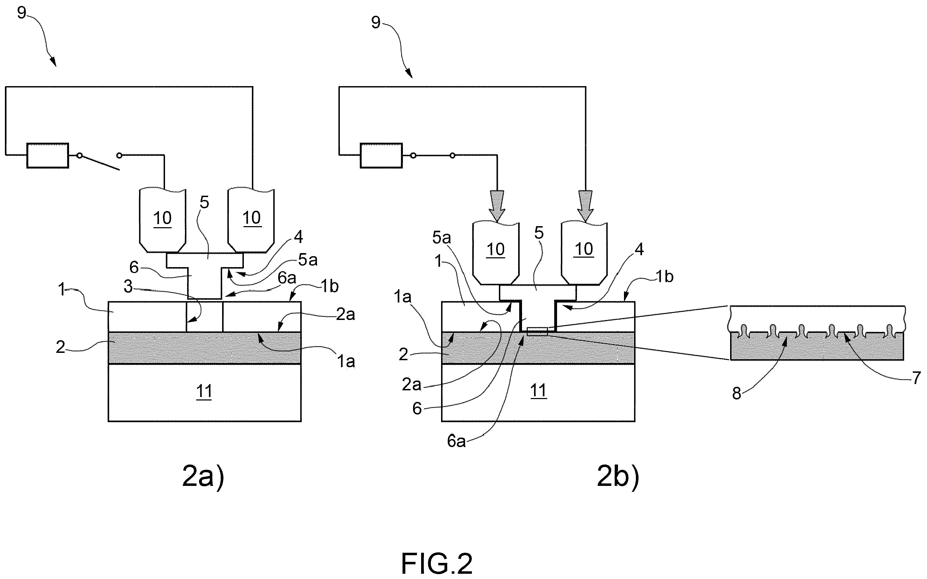

Figures 2a and 2b illustrate a joining system according to a further embodiment of the method according to the present invention.

In Figures 2a and 2b the parts identical to those already illustrated in Figures 1a and 1b will be indicated with the same numbering and will not be described again.

The system of Figures 2a and 2b differs from that of Figures 1a and 1b in that the two electrodes 10 are both in contact with the locking head 5. The presence of both of the two electrodes 10 on the locking head 5 implies the presence of a support 11 arranged under the material 2.

The system illustrated in Figures 2a and 2b becomes necessary if the second material is non-conductive, or, if the dimensions are such that it is not possible to bring one of the electrodes into contact with the second material.

Also with this system, joining occurred through heating of the material 2 and subsequent filling of the grooves 8 (magnification of Figure 2b).

The tensile tests already performed for the system illustrated in Figures 1a and 1b were also performed for the system illustrated in Figures 2a and 2b, and the same results were obtained.

Conversely to the above, the joining element need not comprise a locking head, but may comprise a stem only.

A first end of the stem will have the axial crimping surface as described above, while a second end of the stem will be subject to a riveting operation in order to be properly forged and to be able to perform the locking function of the first material.

## Claims

1. A method to mechanically join two materials; said method being **characterized in that** it comprises in succession:
- a contact step, during which a first material (1), in which a first through hole (3) has previously been made, is placed with a joining surface (1a) thereof in contact with a joining surface (2a) of a second material (2); said previously made hole (3) being engaged by a joining element (4) made of a conductive material and having a melting temperature that is higher than the melting temperature of said second material (2); said joining element (4) comprising a locking end (5) and a crimping end (6a), in which an axial crimping surface (7) placed in contact with said joining surface (2a) of said second material (2) is defined; a plurality of grooves (8) with an undercut profile being obtained in said axial crimping surface (7);
- a joining step, during which at least said axial crimping surface (7) is subjected to a heating operation so as to heat the portion of joining surface (2a) of said second material (2) with which it comes into contact, thus causing said grooves (8) to be filled with said second material (2).

2. The method according to claim 1, **characterized in that** said joining step comprises a compression operation, during which, simultaneously with the heating operation, the second material (2) and said joining element (4) are compressed against one another.

3. The method according to one of the preceding claims, **characterized in that** said heating operation is carried out by means of a current flow.

4. The method according to claim 3, **characterized in that** said current flow is obtained by placing a first electrode (10) in contact with said locking end (5) and a second electrode (10) in contact with the second material (2) .

5. The method according to claim 4, **characterized in that** said current flow is obtained by placing both a first and a second electrode (10) in contact with said locking end (5).

6. The method according to one of the preceding claims, **characterized in that** it comprises a preliminary cutting step, during which a plurality of said grooves (8) are obtained on the axial crimping surface (7).

7. The method according to claim 6, **characterized in that** said cutting step is carried out by means of a laser technique.

8. A joining element (4) to join two materials; said joining element being **characterized in that** it is made of a conductive material and comprises a locking end (5) and a crimping end (6a) having an axial crimping surface (7) placed, in use, in contact with a joining surface of a second material (2); a plurality of grooves (8) with an undercut profile being obtained in said axial crimping surface (7).

9. The joining element according to claim 8, **characterized in that** on said locking end (5) and a side wall thereof a plurality of grooves and nicks are obtained such as to obtain a rough surface.
